# EUROPÄISCHE PATENTSCHRIFT

(11) **EP 0 923 975 B1**
(45) Veröffentlichungstag und Bekanntmachung des Hinweises auf die Patenterteilung: **07.05.2003**
(21) Anmeldenummer: 98123275.4
(22) Anmeldetag: 07.12.1998
(51) Int. Cl.: B01D 46/24, F02M 35/04

(54) **Luftfilter**
Air filter
Filtre à air

(30) Priorität: 17.12.1997 DE 19756247
(43) Veröffentlichungstag der Anmeldung: 23.06.1999
(73) Patentinhaber: ROBERT BOSCH GMBH, 70442 Stuttgart (DE); Bayerische Motoren Werke Aktiengesellschaft, 80788 München (DE)
(72) Erfinder: Westenberger, Lutz, 71686 Remseck (DE); Hezel, Brunno, 70565 Stuttgart (DE); Ulrich, Markus, 73635 Rudersberg (DE); Buschberger, Walter, 4400 Steyr (AT); Reisinger, Walter, 4311 Schwertberg (AT); Wichtl, Rudolf, 4451 Garsten (AT)
(74) Vertreter: Voss, Klaus, Dipl.-Ing.

(56) Entgegenhaltungen:
- WO-A-79/00978
- GB-A- 2 070 969

## Beschreibung

### Hintergrund der Erfindung

Die Erfindung betrifft einen Luftfilter zur Reinigung der von einem Verbrennungsmotor angesaugten Luft gemäß dem Oberbegriff des Patentanspruchs 1.

Ein derartiger Luftfilter ist aus GB-A-2 070 969 bekannt.

Ein weiterer Luftfilter für einen Kraftfahrzeug-Verbrennungsmotor ist beispielsweise aus WO-A-79/00978 bekannt.

Zur Reinigung der von einem Verbrennungsmotor angesaugten Luft sind Luftfilter der unterschiedlichsten Bauarten im Einsatz. Zumeist weisen solche Luftfilter ein auswechselbares, in Längsrichtung gefaltetes Papierfilterelement auf, welches den mit der angesaugten Luft mitgeführten Staub und andere Verunreinigungen zurückhält. Bedingt durch den beschränkten Platz im Motorraum eines Kraftfahrzeugs, hat ein solcher Luftfilter häufig eine langgestreckte konische Bauweise. So auch der aus der oben genannten WO-A-97/00978 bekannte Luftfilter.

Wenn ein solcher Luftfilter mit langgestreckter konischer Bauform in waagerechter Lage eingebaut ist, wie dies zumeist in Personenkraftwagen der Fall sein wird, besteht die Gefahr, daß die mit der angesaugten Luft in den Luftfilter gelangten Wasserteilchen in den Verbrennungsraum des Motors gesaugt werden. Wenn das Kraftfahrzeug beispielsweise auf regennasser Straße fährt, kann Spritz- oder Gischtwasser und bei Schneefall Schneestaub in den Luftfilter gelangen. Dieser Schneestaub schmilzt durch die im Motorraum herrschende höhere Temperatur und das Schmelzwasser sickert durch das Papierfilterelement hindurch. Dabei kann das Ansaugen des eingedrungenen Wassers in den Verbrennungsraum des Motors noch durch die konische Form des Luftfilters begünstigt werden. Der aus der oben genanntenWO-A-79/00978 bekannt Lustfilter hat keine Mittel zum Ablauf des eingedrungenen Wassers.

Die GB-A-2 070 969 beschreibt einen Luftfilter, bei dem die Längsachse der Patrone in Einbaulage einen Winkel zur Horizontalen so bildet, dass diese Längsachse im Bereich der Luftausströmöffnung höher als im Bereich der entgegengesetzten Vorderseite liegt. Allerdings dient diese schräge Einbaulage des konischen Filterelements nicht dazu, etwa eingedrungenes Wasser ablaufen zu lassen, sondern dazu, den Druckabfall im Luftfilter zu verringern, indem der radiale Freiraum zwischen dem Filterelement und der radialen Einströmöffnung für ein gegebenes Filterelement vergrößert wird, ohne dass sich die Gehäusemaße vergrößern. Bei allen beschriebenen und in den Figuren 1 bis 3 der GB 2 070 969 A gezeigten Ausführungsformen sind beide Stirnseiten des gefalteten Papierfilterelements von ringförmigen Kappen dicht abgeschlossen, so dass Wasser, das zwischen den Rippen des gefalteten Papierfilterelements bzw. der Papierfilterelemente steht bzw. rinnt nicht ablaufen kann.

### Kurzfassung der Erfindung

Aufgabe der Erfindung ist es somit, einen gattungsgemäßen, Luftfilter so zu verbessern, daß in den Luftfilter eingedrungenes Wasser gut ablaufen und nicht mehr in den Verbrennungsraum des Motors gelangen kann.

Diese Aufgabe wird gemäß einem wesentlichen Aspekt der Erfindung gelöst durch ein Luftfilter zur Reinigung der von einem Verbrennungsmotor angesaugten Luft, mit
- einem langgestreckten, luftdurchlässigen Außenmantel,
- einem an der Innenwand des Außenmantels anliegenden Papierfilterelement mit in seiner Längsrichtung gefalteten radialen Rippen, und
- einem das Innere des Papierfilterelements abstützenden länglichen Stützelement, das einen luftdurchströmten Innenraum definiert, der eine Luft-Ausströmöffnung besitzt, die dicht an den Verbrennungsmotor anschließbar ist, wobei der Außenmantel und das Papierfilterelement jeweils eine geschlossene Umfangskontur bilden, so dass die angesaugte Luft durch den Außenmantel, das Papierfilterelement in den Innenraum und von dort durch die Ausströmöffnung strömen kann, und die wenigstens aus dem Papierfilterelement und dem Stützelement gebildete Patrone eine konische Form derart hat, daß sie im Bereich der Ausströmöffnung einen größeren Querschnitt besitzt und sich zu ihrer entgegengesetzten Vorderseite hin verjüngt, wobei der Luftfilter an dem Verbrennungsmotor so anbaubar ist, dass die Längsachse der Patrone einen Winkel zur Horizontalen (H) bildet und diese Längsachse im Bereich der Luft-Ausströmöffnung höher liegt als im Bereich der entgegengesetzten Vorderseite.
Der erfindungsgemäße Luftfilter ist dadurch gekennzeichnet, dass
der Querschnitt der Filterpatrone über ihre gesamte Länge oval oder elliptisch derart geformt ist, dass sich der Querschnitt nur hinsichtlich der längeren Querschnittsachse konisch verjüngt,
der Luftfilter so am Verbrennungsmotor anbaubar ist, dass diese längere Querschnittsachse im wesentlichen vertikal ausgerichtet ist, und
der Luftfilter zwischen den nach oben und unten ragenden oberen und unteren Rippen des Papierfilterelements Wasserablaufrinnen aufweist, die aufgrund der geneigten Längsachse der Patrone zur Vorderseite schräg nach unten laufen.

Auf diese Weise kann in den erfindungsgemäß gestalteten Luftfilter eingedrungenes Wasser in den zwischen den nach oben und unten ragenden Rippen des Papierfilterelements gebildeten, zur Vorderseite hin schräg nach unten laufende Ablaufrinnen ablaufen und dadurch nicht mehr in den Verbrennungsraum des Motors gelangen.

In weiterer Ausbildung bilden wenigstens das Papierfilterelement und das im Inneren vorhandene Stützelement eine fest miteinander verbundene Einheit, die Filterpatrone.

Da der Querschnitt der genannten Filterpatrone über ihre ganze Länge oval oder elliptisch derart geformt ist , dass sich dieser Querschnitt nur in der längeren Querschnittsachse konisch verjüngt und dass letztere in der Einbaulage im wesentlichen vertikal ausgerichtet ist, verbessert sich die Fähigkeit zum Wasserablauf des erfindungsgemäßen Luftfilters deutlich und gleichzeitig kann der Luftfilter bei gleichbleibender Luftdurchsatzkapazität schmaler gemacht werden.

In einer weiteren bevorzugten Ausbildungsform sind ausschließlich die radial innen liegenden Bereiche der Stirnseiten des Papierfilterelements mit dort vorgesehenen Abschlußdichtungselementen verklebt. Ein an der erfindungsgemäß liegenden Vorderseite des Luftfilters angeschäumtes, aus PUR-Schaum bestehendes ovales oder elliptisches Abschlußdichtungselement ist scheibenförmig und dichtet den durch das Stützelement definierten Innenraum an der Filtervorderseite ab, läßt jedoch einen ringförmigen Bereich zwischen sich und dem Außenmantel offen, in dem die genannten durch die nach oben und unten ragenden Rippen des Papierfilterelements definierten, schräg nach unten geneigten Ablaufrinnen offen enden.

Entgegengesetzt dazu ist ein weiteres aus PUR-Schaum bestehendes Abschlußdichtungselement angeschäumt, so daß es die ovale oder elliptische Ausströmöffnung ringförmig umgibt.

Das zuletzt genannte Abschlußdichtungselement springt nach außen ringwulstartig vor. Dabei kann die Stirnfläche dieses Ringwulsts in einer im wesentlichen vertikalen Ebene liegen.

Wie gesagt, sind lediglich die radial innen liegenden Bereiche der Stirnseiten des gefalteten Papierfilterelements mit den oben erwähnten, aus PUR-Schaum bestehenden Abschlußdichtungselementen fest verbunden, d.h. verklebt.

Eine vorteilhafte Ausbildungsform sieht vor, daß das im Inneren des Papierfilterelements befindliche Stützelement einstückig mit einem motorwärts ragenden Diffusor durch Kunststoffspritzguß gebildet ist.

Durch diese Maßnahme wird der innere Hohlraum des Luftfilters optimal genutzt und eine akustische Dämpfungswirkung im Luftfilter erreicht. Durch die Kunststoffspritzformung des Stützelements zusammen mit dem damit einstückigen Diffusor wird eine Verringerung der Herstellungskosten erreicht.

Damit eine optimale Luftdurchlässigkeit und gleichzeitig Schutz gegen Verkleben des Papierfilters durch Flugschnee erreicht wird, besteht der langgestreckte luftdurchlässige Außenmantel aus einem Filtervlies, das somit eine durch das Verkleben von Flugschnee mit den Papierfilterelement verursachte drastische Leistungsreduzierung des Verbrennungsmotors verhindert. Außerdem erhöht das Filtervlies des Außenmantels die Standzeit des Luftfilters.

Weitere Merkmale und vorteilhafte Eigenschaften des erfindungsgemäßen Luftfilters werden aus der nachfolgenden Beschreibung einer bevorzugten Ausführungsform noch deutlicher, wenn diese bezugnehmend auf die beiliegenden Zeichnungsfiguren gelesen wird. Die Zeichnungsfiguren zeigen im einzelnen:
- Fig. 1 eine bevorzugte Ausführungsform des Luftfilters in Form eines schematischen Längsschnitts in vertikaler Richtung, der die konische Form und die schräge Einbaulage des erfindungsgemäßen Luftfilters veranschaulicht;
- Fig. 2 einen Längsschnitt durch dieselbe Ausführungsform in horizontaler Richtung;
- Fig. 3 eine ebene Draufsicht auf die in den Figuren 1 und 2 rechts liegende Vorderseite; und
- Fig. 4 eine ebene Draufsicht auf die zum Verbrennungsmotor weisende Stirnseite mit der Luft-Ausströmöffnung 16 des in den Figuren 1 bis 3 gezeigten bevorzugten Ausführungsbeispiel des Luftfilters.

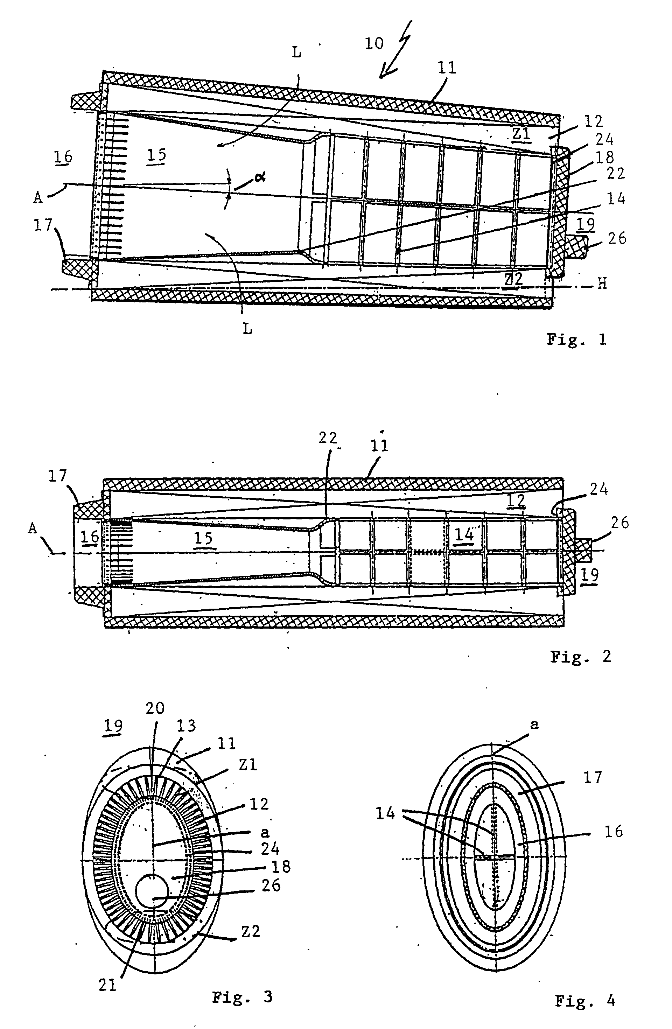

In Fig. 1 hat eine erfindungsgemäße Ausführungsform eines Luftfilters die Form einer langgestreckten konischen und ovalen oder elliptischen Patrone 10, die ein Papierfilterelement 12 und ein kombiniertes Stütz- und Diffusorelement 14, 22 aufweist (vgl. auch die Figuren 3 und 4). Die genannte Patrone ist von einem ebenfalls konischen und ovalen oder elliptischen langgestreckten Außenmantel 11 aus Filtervlies umgeben, so daß Luft L von außerhalb des Außenmantels 11 durch das Papierfilterelement 12 in den Innenraum 15 gesaugt werden kann und gleichzeitig mit der Luft mitgeführte Schmutzpartikel, wie Staub, im Papierfilterelement 12 zurückgehalten werden. Der als Filtervlies gestaltete Außenmantel 11 hält gröbere Teilchen, z.B. evtl. mit der Luft angesaugten Flugschnee, vom Papierfilterelement 12 fern, so daß diese Teilchen das Papierfilterelement 12 nicht verstopfen können.

Zum Verbrennungsmotor hin hat die Filterpatrone 10 eine ovale oder elliptische Luft-Ausströmöffnung 16 (vgl. Fig. 4), die von einem als Ringwulst gestalteten Abschlußdichtungselement 17 von ovaler bzw. elliptischer Form umgeben ist. Das Abschlußdichtungselement wird aus PUR-Schaum angeschäumt, so daß es die daran anschließende Stirnseite des Papierfilterelements 12 dicht abschließt. Die entgegengesetzt liegende Vorderseite der Filterpatrone 10 ist mit einem zweiten ovalen oder elliptischen scheibenförmigen, ebenfalls aus PUR-Schaum bestehenden zweiten Abschlußdichtungselement 18 derart abgedichtet, daß es den durch das Stützelement 14 gebildeten Innenraum an der Patronenvorderseite 19 dicht abschließt, jedoch einen ringförmigen Bereich zwischen sich und dem Außenmantel 11 offen läßt, in den die nachstehend beschriebenen Ablaufrinnen des Papierfilterelements münden. In Fig. 1 ist mit der Ziffer 24 ein ringförmiger Klebebereich angedeutet, wo das zweite Abschußdichtungselement 18 ausschließlich mit radial innen liegenden Bereichen der anliegenden Stirnseite des Papierfilterelements 12 verklebt ist. Am zweiten Abschlußdichtungselement 18 ist ferner eine einstückig damit gebildete, nach außen ragende Abstütznase 26 vorgesehen, um den Luftfilter an einem dafür vorgesehenen Bauteil abzustützen.

In Fig. 1 ist der erfindungsgemäße Luftfilter bzw. die Filterpatrone 10 in ihrer Einbaulage dargestellt, bei der die Längsachse A der Patrone 10 um einen kleinen Winkel α zur Horizontalen H so geneigt ist, daß die genannte Längsachse A der Patrone 10 im Bereich der Luft-Ausströmöffnung 16 höher liegt als im Bereich ihrer entgegengesetzten Vorderseite 19.

Der Sinn und Zweck der zuletzt genannten Maßnahme wird verständlich, wenn die Funktion der Wasserablaufmittel weiter unten anhand der Fig. 3 beschrieben werden.

Fig. 2 zeigt, daß sich die Patrone 10 lediglich bezüglich ihrer in Fig. 1 dargestellten vertikalen Abmessung zum Vorderende 19 hin verjüngt, nicht dagegen bezüglich der in Fig. 2 gezeigten horizontalen Abmessung. Ausgenommen ist der einstückig mit dem Stützelement 14 durch Kunststoffspritzen gebildete Diffusor 15, der sich, wie die Figuren 1 und 2 zeigen, zur Ausströmöffnung 16 hin stetig aufweitet.

Nachstehend werden anhand der Fig. 3, die eine schematische Draufsicht auf die Vorderseite 19 der in den Figuren 1 und 2 als Längsschnitte gezeigten Ausführungsform des Luftfilters darstellt, die Ablaufmittel Z1, Z2 beschrieben, die in Kombination mit der zuvor geschilderten, in Fig. 1 gezeigten, Schrägstellung der Patrone 10 in den Filter gelangtes Wasser an der Vorderseite 19 ausfließen lassen. Diese Ablaufmittel sind in Fig. 1 lediglich durch die Bezugszeichen Z1 und Z2 angedeutet, in Fig. 3 aber als Zonen Z1, Z2 erkenntlich, die jeweils durch eine gestrichelte elliptische Linie umrahmt sind. In den Zonen Z1 und Z2 ragen die Rippen 13 des in Längsrichtung gefalteten Papierfilterelements 12 jeweils nach oben und nach unten und bilden dazwischen Wasserablaufrinnen 20 und 21, die aufgrund der in Fig. 1 ersichtlichen schrägen Einbaulage der Patrone 10 ebenfalls zur Vorderseite 19 hin schräg nach unten laufen. Aufgrund der Konizität der Patrone 10 ist diese Schräge der Ablaufrinnen 20, 21 in der Ablaufzone Z1 stärker ausgeprägt als in der Ablaufzone Z2. Da lediglich der radial innenliegende ringförmige Bereich 24 des Papierfilterelements 12 mit dem dortigen Abschlußelement 18 verklebt ist, öffnen sich die nach unten laufenden Wasserablaufrinnen 20 und 21 zur genannten ringförmigen Öffnung an der Vorderseite 19. Dort kann eingedrungenes Wasser in ein (nicht gezeigtes) Filtergehäuse und von dort nach außen abfließen und gelangt nicht durch die Luft-Ausströmöffnung 16 in den Verbrennungsraum des Motors.

Schließlich zeigt die Fig. 4 eine ebene Draufsicht auf die zum Motor weisende Stirnseite des in den Figuren 1 bis 3 dargestellten Luftfilters mit der Luft-Ausströmöffnung 16, die von dem ovalen oder elliptischen Ringwulst des ersten Abschlußdichtungselements 17 umgeben ist.

Zur Anpassung an eine senkrechte Fläche oder Flansch der Brennkraftmaschine kann die Stirnfläche der zum Verbrennungsmotor weisenden Seite, d.h. des Ringwulstes des ersten Abschlußdichtungselements 17 trotz der geneigten Lage der Patrone vertikal liegen. Dies wird durch eine entsprechende Abschrägung des Ringwulstes des Abschlußdichtungselements 17 erreicht.

Die Figuren 3 und 4 zeigen auch deutlich die vertikale Stellung der langen Querschnittsachse a.

Die zur Herstellung des oben anhand der Figuren 1 bis 4 beschriebenen erfindungsgemäßen Luftfilters verwendeten Materialien sind leicht und kostengünstig, das sind insbesondere Kunststoff, Papier, PUR-Schaum und Klebstoff. Die gesamte anhand der Figuren 1 bis 4 gezeigte Filterpatrone 10 ist eine Einheit. Diese Einheit kann mit oder ohne den aus Fließstoff bestehenden Außenmantel 11 gefertigt, werksseitig ausgeliefert, gelagert und vom Händler vertrieben werden.

Erfindungsgemäß ist die Längsachse eines primär für den Einsatz zur Reinigung der einem Brennkraftmotor zugeführten Luft geeigneten länglichen und konischen Luftfilters schräg zur Horizontalen gestellt. Damit wird erreicht, daß die die Wasserablauflaufrinnen bildenden Zwischenräume zwischen den nach oben und unten ragenden Rippen des konischen Papierfilterelements ebenfalls schräg gegen die Horizontale geneigt sind, so daß in den Luftfilter eingedrungenes Wasser an der dem Brennkraftmotor entgegengesetzten Vorderseite des Luftfilters abfließen kann. Der Innenraum des Luftfilters ist mit einem mit dem Stützgitter einstückig durch Kunststoffspritzen gebildeten Diffusor ausgerüstet, der geräuschdämpfend wirkt. Der als Filtervlies realisierte Außenmantel hält vorteilhafterweise Flugschnee vom Papierfilterelement fern und vermeidet dadurch eine motorleistungsmindernde Verstopfung des Luftfilters.

## Patentansprüche

1. Luftfilter zur Reinigung der von einem Verbrennungsmotor angesaugten Luft, mit
- einem langgestreckten, luftdurchlässigen Außenmantel (11),
- einem an der Innenwand des Außenmantels (11) anliegenden Papierfilterelement (12) mit in seiner Längsrichtung gefalteten radialen Rippen (13), und
- einem das Innere des Papierfilterelements (12) abstützenden länglichen Stützelement (14), das einen luftdurchströmten Innenraum (15) definiert, der eine Luft-Ausströmöffnung (16) besitzt, die dicht an den Verbrennungsmotor anschließbar ist, wobei der Außenmantel (11) und das Papierfilterelement (12) jeweils eine geschlossene Umfangskontur bilden, so dass die angesaugte Luft (L) durch den Außenmantel (11), das Papierfilterelement (12) in den Innenraum (15) und von dort durch die Ausströmöffnung (16) strömen kann, und die wenigstens aus dem Papierfilterelement (12) und dem Stützelement (14) gebildete Patrone (10) eine konische Form derart hat, daß sie im Bereich der Ausströmöffnung (16) einen größeren Querschnitt besitzt und sich zu ihrer entgegengesetzten Vorderseite (19) hin verjüngt, wobei der Luftfilter an dem Verbrennungsmotor so anbaubar ist, dass die Längsachse (A) der Patrone (10) einen Winkel zur Horizontalen (H) bildet und diese Längsachse (A) im Bereich der Luft-Ausströmöffnung (16) höher liegt als im Bereich der entgegengesetzten Vorderseite (19), **dadurch gekennzeichnet, dass**
der Querschnitt der Filterpatrone (10) über ihre gesamte Länge oval oder elliptisch derart geformt ist, dass sich der Querschnitt nur hinsichtlich der längeren Querschnittsachse (a) konisch verjüngt,
der Luftfilter so am Verbrennungsmotor anbaubar ist, dass diese längere Querschnittsachse (a) im wesentlichen vertikal ausgerichtet ist, und
der Luftfilter zwischen den nach oben und unten ragenden oberen und unteren Rippen des Papierfilterelements (12) Wasserablaufrinnen (20,21) aufweist, die aufgrund der geneigten Längsachse (A) der Patrone (10) zur Vorderseite (19) schräg nach unten laufen.

2. Luftfilter nach Anspruch 1, **dadurch gekennzeichnet, dass** das Papierfilterelement (12) und das Stützelement (14) fest miteinander verbunden sind.

3. Luftfilter nach Anspruch 1 oder 2, **dadurch gekennzeichnet, dass** stirnseitige Abschlußdichtungselemente (17, 18) vorgesehen sind, mit denen die beiden Stirnseiten des Papierfilterelements (12) ausschließlich an ihren radial inneren Bereichen (24) verklebt sind.

4. Luftfilter nach einem der vorangehenden Ansprüche, **dadurch gekennzeichnet, dass** das Stützelement (14) eine konische Gitterstruktur bildet, die einstückig mit einem zur Luft-Ausströmöffnung (16) hin sich anschließenden und dort endenden Diffusor (22) des Luftfilters gebildet ist.

5. Luftfilter nach Anspruch 4, **dadurch gekennzeichnet, dass** das Stützelement (14) und der Diffusor (22) einstückig als Spritzteil aus Kunststoff gebildet sind.

6. Luftfilter nach einem der vorangehenden Ansprüche, **dadurch gekennzeichnet, dass** der Außenmantel (11) aus einem Filtervlies besteht.

7. Luftfilter nach einem der vorangehenden Ansprüche, **dadurch gekennzeichnet, dass** ein erstes aus PUR-Schaum bestehendes Abschlussdichtungselement (17) die ovale oder elliptische Luft-Ausströmöffnung (16) ringförmig umgibt, mit seiner ersten Seite die daran anschließende Stirnseite des Papierfilterelements (12) dicht abschließt und mit seiner zweiten, der ersten Seite engegengesetzten Seite ringwulstartig vorspringt.

8. Luftfilter nach Anspruch 7, **dadurch gekennzeichnet, dass** die Stirnfläche der zum Verbrennungsmotor weisenden Seite des ersten Abschlussdichtungselements (17) im wesentlichen vertikal liegt.

9. Luftfilter nach einem der vorangehenden Ansprüche, **dadurch gekennzeichnet, dass** ein zweites aus PUR-Schaum bestehendes ovales oder elliptisches Abschlussdichtungselement (18) scheibenförmig ist und den durch das Stützelement (14) definierten Innenraum (15) an der Vorderseite dicht abschließt, jedoch einen ringförmigen Bereich zwischen sich und dem Außenmantel (11) offen läßt, in dem die Ablaufrinnen (20,21) des Papierfilterelements (12) offen enden.

10. Luftfilter nach Anspruch 9, **dadurch gekennzeichnet, dass** eine axial nach außen ragende Abstütznase (26) einstückig an dem zweiten Abschlussdichtungselement (18) angeformt ist.

## Claims

1. Air filter for purifying the air sucked in by an internal combustion engine, with
- an elongate air-permeable outer casing (11),
- a paper filter element (12) bearing against the inner wall of the outer casing (11) and having radial ribs (13) folded in its longitudinal direction, and
- an elongate supporting element (14) which supports the inside of the paper filter element (12) and defines an inner space (15) through which the air flows and which possesses an air outflow orifice (16) sealingly connectable to the internal combustion engine, the outer casing (11) and the paper filter element (12) each forming a closed circumferential contour, so that the sucked-in air (L) can flow through the outer casing (11) and the paper filter element (12) into the inner space (15) and from there through the outflow orifice (16), and the cartridge (10) formed at least from the paper filter element (12) and the supporting element (14) having a conical shape such that it possesses a larger cross section in the region of the outflow orifice (16) and narrows towards its opposite front side (19), the air filter being mountable on the internal combustion engine in such a way that the longitudinal axis (A) of the cartridge (10) forms an angle to the horizontal (H), and this longitudinal axis (A) is higher in the region of the air outflow orifice (16) than in the region of the opposite front side (19),
**characterized in that**
the cross section of the filter cartridge (10) has over its entire length an oval or elliptic shape such that the cross section narrows conically only in terms of the longer cross-sectional axis (A),
the air filter is mountable on the internal combustion engine in such a way that this longer cross-sectional axis (A) is oriented essentially vertically, and
the air filter has, between the upwardly and downwardly projecting upper and lower ribs of the paper filter element (12), water run-off channels (20, 21) which, by virtue of the inclined longitudinal axis (A) of the cartridge (10), run obliquely downwards towards the front side (19).

2. Air filter according to Claim 1, **characterized in that** the paper filter element (12) and the supporting element (14) are firmly connected to one another.

3. Air filter according to Claim 1 or 2, **characterized in that** end-face close-off sealing elements (17, 18) are provided, to which the two end faces of the paper filter element (12) are adhesively bonded solely on their radially inner regions (24).

4. Air filter according to one of the preceding claims, **characterized in that** the supporting element (14) forms a conical grid structure which is formed in one piece with a diffuser (22) of the air filter, the said diffuser following towards the air outflow orifice (16) and ending there.

5. Air filter according to Claim 4, **characterized in that** the supporting element (14) and the diffuser (22) are formed in one piece as an injection moulding from plastic.

6. Air filter according to one of the preceding claims, **characterized in that** the outer casing (11) consists of a filter nonwoven.

7. Air filter according to one of the preceding claims, **characterized in that** a first close-off sealing element (17) consisting of polyurethane foam annularly surrounds the oval or elliptic air outflow orifice (16), with its first side sealingly closes off the adjoining end face of the paper filter element (12) and with its second side opposite the first side projects in the manner of an annular bead.

8. Air filter according to Claim 7, **characterized in that** the end face of that side of the first close-off sealing element (17) which points towards the internal combustion engine lies essentially vertically.

9. Air filter according to one of the preceding claims, **characterized in that** a second oval or elliptic close-off sealing element (18) consisting of polyurethane foam is disc-shaped and sealingly closes off, on the front side, the inner space (15) defined by the supporting element (14), but leaves open, between itself and the outer casing (11), an annular region in which the run-off channels (20, 21) of the paper filter element (12) end, open.

10. Air filter according to Claim 9, **characterized in that** a supporting nose (26) projecting axially outwards is integrally formed in one piece on the second close-off sealing element (18).

## Revendications

1. Filtre à air pour nettoyer l'air aspiré par un moteur thermique comportant :
- une enveloppe extérieure (11), allongée, perméable à l'air.
- un élément de papier filtre (12) appliqué contre la paroi intérieure de l'enveloppe extérieure (11) et ayant des nervures radiales (13) pliées dans la direction longitudinale et
- un élément d'appui (14) allongé qui s'appuie contre l'intérieur de l'élément de papier filtre (12), et qui définit le volume intérieur (15) traversé par l'air, ce volume comportant un orifice de sortie d'air (16) qui ne se raccorde pas directement au moteur thermique,
dans lequel
l'enveloppe extérieure (11) et l'élément de papier filtre (12) forment chaque fois un contour périphérique fermé de sorte que l'air aspiré (L) peut s'écouler à travers l'enveloppe extérieure (11), l'élément de papier filtre (12) jusqu'à l'intérieur (15) et de là par l'orifice de sortie (16), et la cartouche (10) formée au moins par l'élément de papier filtre (12) et par l'élément d'appui (14) a une forme conique dont la section la plus grande se trouve au niveau de l'orifice de sortie (16) et qui va en diminuant vers la face avant (19) opposée.
le filtre à air se montant sur le moteur thermique de façon que l'axe longitudinal (A) de la cartouche (10) fasse un angle par rapport à la direction horizontale (H) et que cet axe longitudinal (A) se situe plus haut au niveau de l'orifice de sortie d'air (16) qu'au niveau de la face avant (19) opposée.
**caractérisé en ce que**
la section de la cartouche de filtre (10) a une forme ovale ou elliptique sur toute sa longueur pour que la section diminue de manière conique seulement suivant son plus grand axe transversal (a).
le filtre à air est monté sur le moteur thermique de façon que son axe transversal le plus long (a) soit essentiellement aligné verticalement, et
le filtre à air comporte entre les nervures supérieures et inférieures dirigées vers le haut et vers le bas de l'élément de papier filtre (12), des goulottes d'évacuation d'eau (20, 21) qui descendent de manière inclinée du fait de l'inclinaison de l'axe longitudinal (A) de la cartouche (10) vers la face avant (19).

2. Filtre à air selon la revendication 1,
**caractérisé en ce que**
l'élément de papier filtre (12) et l'élément d'appui (14) sont reliés solidairement.

3. Filtre à air selon la revendication 1 ou 2,
**caractérisé par**
des éléments d'étanchéité de fermeture frontale (17, 16) à l'aide desquels les deux faces frontales de l'élément de papier filtre (12) sont collées exclusivement sur leur zone radiale intérieure (24).

4. Filtre à air selon l'une des revendications précédentes
**caractérisé en ce que**
l'élément d'appui (14) forme une structure de réseau conique réalisée en une seule pièce avec un diffuseur (22) du filtre à air adjacent à l'orifice de sortie d'air (16) et se terminant à cet endroit.

5. Filtre à air selon la revendication 4,
**caractérisé en ce que**
l'élément d'appui (14) et le diffuseur (22) sont constitués en une seule pièce injectée en matière plastique.

6. Filtre à air selon l'une des revendications précédentes,
**caractérisé en ce que**
l'enveloppe extérieure (11) est formée d'un non-tissé de filtre.

7. Filtre à air selon l'une des revendications précédentes.
**caractérisé par**
un premier élément d'étanchéité (17) en mousse de polyuréthanne qui entoure de façon annulaire suivant une forme ovale ou elliptique l'orifice de sortie d'air (16), et dont le premier côté ferme de manière étanche la face frontale adjacente de l'élément de papier filtre (12) et dont le second côté opposé au premier côté est entouré à la manière d'un bourrelet annulaire.

8. Filtre à air selon la revendication 7,
**caractérisé en ce que**
la surface frontale du côté du premier élément d'étanchéité de fermeture (17) à l'opposé de la surface frontale tournée vers le moteur thermique est essentiellement verticale.

9. Filtre à air selon l'une des revendications précédentes,
**caractérisé par**
un second élément d'étanchéité de fermeture (18), en forme de plaque ovale ou elliptique, en mousse de polyuréthanne, qui ferme de manière étanche l'espace (15) de la face avant, défini par l'élément d'appui (14) en ayant toutefois une zone annulaire ouverte entre cet élément et l'enveloppe extérieure (11), zone dans laquelle débouchent les goulottes d'évacuation (20, 21) de l'élément de papier filtre (12).

10. Filtre à air selon la revendication 9,
**caractérisé par**
un bec d'appui (26) en saillie et axialement vers l'extérieur et qui est formé en une seule pièce sur le second élément d'étanchéité de fermeture (18).
